# EUROPEAN PATENT SPECIFICATION

(11) **EP 4 392 681 B1**
(45) Date of publication and mention of the grant of the patent: **01.04.2026**
(21) Application number: 22764470.5
(22) Date of filing: 23.08.2022
(51) Int. Cl.: B66F 19/00, F16B 21/16, F16B 2/12, F16D 1/116, F16F 15/04, F16F 7/00

(54) **MECHANICAL CONNECTION SYSTEM**
MECHANISCHES VERBINDUNGSSYSTEM
SYSTÈME DE CONNEXION MÉCANIQUE

(30) Priority: 27.08.2021 IT 202100022445
(43) Date of publication of application: 03.07.2024
(73) Proprietor: Feda S.r.l., 05100 Terni (TR) (IT)
(72) Inventor: CICCIOLA, Valerio, 05100 Terni (TR) (IT); CORDERO MARQUEZ, Francisco Manuel, 05100 Terni (TR) (IT)
(74) Representative: IP Sextant s.r.l.
(86) International application number: PCT/IB2022/057869
(87) International publication number: WO 2023/026176

(56) References cited:
- CN-A- 111 704 091
- DE-A1- 19 544 409
- DE-U1- 202005 007 711
- US-A- 4 760 984
- US-A- 5 052 430
- US-A- 5 704 100
- US-B2- 7 070 246

## Description

The present invention relates to a mechanical connection system configured to mechanically and reciprocally connect two components, in a removable way.

In the following description, reference will be made to a connection system configured to connect, in a removable way, a lifting tool to a support, although it is understood that the mechanical connection system according to the invention is generally used to connect in a removable way two components and, therefore, not just a tool with a support.

In particular, in the following description reference will be made, by way of example but not of limitation, to the use of a mechanical connection system, or connection system for the sake of brevity, for the removable connection between a tool configured as a coupling head of the type magnetic and a support.

Such a tool can be used in a manhole cover lifting system.

It is understood that the connection system can also be used for connecting tools of different types to a support, or for use in alternative mechanical devices compared to a lifting system for manhole covers, without any limitation.

Mechanical connection systems for reciprocal connection between a first component and a second component of the removable type are known.

US 2328988 discloses a mechanical connection system comprising a rod-shaped element configured to engage a seat delimited at one end of a second rod-shaped element to be connected to the first. The first and second rod-shaped elements both define a through opening which can be engaged by a pin through which the two rod-shaped elements can be mutually connected. The plug is connected to the second rod-shaped element by a rope to avoid losing it.

To connect the first rod-shaped element and the second rod-shaped element it is necessary to correctly align the through opening delimited in each of them as well as having to then insert the plug inside the openings aligned with each other. This operation is therefore not easy to carry out.

Furthermore, such a connection does not allow to support high stresses as in the case wherein one of the two components is connected hanging from the other of the two components and is used, in turn, to lift a weight, as occurs for example in the tools used in lifting systems for lifting manhole covers or similar.

US 7070246B2 discloses a mechanical connection system which comprises a retaining element, shaped as a plate-like element, which is configured to selectively constrain a disc element in position to a rod-like support.

The plate-like element can be moved between a locking position and a release position by acting on a gripping portion which is positioned at the rear, with respect to the disc element, making it difficult to be reached.

Documents US7070246, describes a quick release device that comprises a locking element shaped as a plate element that delimits a through opening. The through opening delimits at one end a narrow engagement portion, suitable for selectively engaging a recess delimited in a pin, to selectively retain it inside a body to which the locking element is operatively connected. In particular, the locking element is inserted inside a seat delimited between a first base portion and a covering element connected to it.

Document US5052430 discloses a mechanical holding device that comprises a holding element that, in turn, comprises a first arm, a second arm connected to each other, at a first end thereof, by means of a plate that also acts as a stop. The first arm and the second arm are free at their second ends.

Other mechanical connection systems are known from US5704100, US 4760984 and DE202005007711.

In the sector there is a need to be able to connect or separate two components from each other quickly and safely according to a solution that is not affected by the drawbacks of traditional solutions described above.

The object of the present invention is to allow in a simple, efficient and practical way the mechanical connection or separation between two components, in general between a support and a supported element.

Another object of the present invention is to ensure a stable and safe connection between two components, such as to prevent accidental detachments between them even in the case wherein the connection point is subjected to high mechanical stresses.

A further purpose of the present invention is to allow a quick connection or detachment between two components, without requiring the use of any tools.

Another object of the present invention is to distribute the stresses acting in correspondence with the connection system to optimize the tightness of the connection itself.

The specific object of the invention is a mechanical connection system with the features of claim 1 comprising:
- a body delimiting a through opening,
- an insert configured to selectively engage the through opening along an engagement direction;
- a retaining element, movably connected inside the body along a sliding direction perpendicular to the engagement direction, wherein the holding element can be selectively moved between a locking configuration, wherein it occupies at least partially a footprint in plan of the through opening to lock the insert inside the through opening and a release position wherein the holding element completely frees the overall dimensions of the through opening to release the insert.

According to the invention, the holding element has two arms which extend parallel and longitudinal to each other along the sliding direction and are mutually connected at their first ends, wherein each of the arms is slidably housed along a respective seat between seats made passing through the body, wherein the seats extend along the sliding direction.

According to a further aspect of the invention, the seats can each have at least one section in communication with the through opening in such a way that each arm of the arms in engagement along a respective seat between the seats extends at least partially into the plan dimensions of the through opening when the holding element is placed in the locked position.

According to an additional aspect of the invention, the insert can have a groove which develops perimeter around a top portion of the insert, wherein the groove is configured to be engaged by at least a portion of the arms when the insert is housed in the through opening and the holding element is in the locked position.

According to another aspect of the invention, each of the arms can have a recess, wherein the recess of one of the arms faces the recess of the other between the arms, the recesses being aligned with each other along the sliding direction, wherein when the holding element is in the release position, the slots are positioned facing the through opening, completely freeing the overall dimensions of the through opening from the overall dimensions of the arms.

According to the invention, the mechanical connection system comprises a connection element connected to second ends of the arms, wherein both the second ends extend outside the body in a position opposite to the first ends of the arms, the connecting element defining a stop position of the holding element with respect to the body along the sliding direction.

According to an additional aspect of the invention, the mechanical connection system can comprise elastic elements each fitted along a respective one of the arms in an interposed position between the body and the connecting element, wherein the elastic elements are configured to keep the element in the locked position or return it to the locked position.

According to another aspect of the invention, each of the arms can have at least one visual signaling element at a respective of the first ends of the arms, wherein the at least one visual signaling element extends at least partially outside the body when the holding element assumes a different position with respect to the locking position.

According to a further aspect of the invention, the mechanical connection system can comprise a damper operatively connected to the insert on the opposite side with respect to a top portion of the insert.

According to an additional aspect of the invention, the damper can comprise a first connection interface, a second connection interface and at least one damper element interposed and operationally connected between the first connection interface and the second connection interface, wherein the first interface connection is connected to a bottom portion of the insert.

According to another aspect of the invention, the first connection interface and the second connection interface can be mutually and yieldably connected via the damper element or wherein the first connection interface and the second connection interface can be mutually connected and yieldably by means of screws and respective elastic elements fitted along each of the screws or wherein the first connection interface and the second connection interface are mutually and yieldably connected by means of screws, wherein the damping elements are each interposed along a respective screw between the screws in the interposed position between the first connection interface and the second connection interface.

The specific object of the invention is also a mechanical assembly comprising a first component and a second component and a mechanical connection system described above, wherein the body of the connection system is connected to one end of the first component and the insert is operationally connected to the second component, the connection system being configured to mutually connect or release the first component and the second component.

The advantages offered by a mechanical connection system according to the invention are evident.

The mechanical connection system according to the invention has an overall simple configuration, comprising a small number of components that are of practical use.

The mechanical connection system according to the invention, in fact, can be operated with bare hands to allow the connection or separation between two mechanical components.

The mechanical system is configured to withstand high stresses and ensure a stable connection between two elements.

Furthermore, the mechanical connection system according to the invention comprises a damping device configured to distribute the stresses acting on the connection system coming from one of the components operatively connected to the connection system itself.

The present invention will now be described, for illustrative but not limitative purposes, according to its preferred embodiments, with particular reference to the Figures of the attached drawings, wherein:
Figure 1 shows a perspective view from above of a mechanical connection system according to the invention;
Figure 2 shows a perspective view from below of a mechanical connection system according to the invention;
Figures 3 and 4 show the mechanical connection system according to the invention in two different positions of use, a lock position (Figure 3) and a release position (Figure 4);
Figure 5 shows an exploded perspective view of some components of the mechanical connection system according to the invention;
Figure 6 shows a perspective view from above of a further embodiment of some components of the mechanical connection system according to the invention;
Figure 7 shows an exploded perspective view of some components of the mechanical connection system according to the invention;
Figure 8 shows a perspective view from above of a further embodiment of some components of the mechanical connection system according to the invention;
Figure 9 shows an exploded perspective view of the components of Figure 8;
Figures 10 and 11 show detailed perspective views, from different angles, of a further embodiment of some components of the mechanical connection system according to the invention.

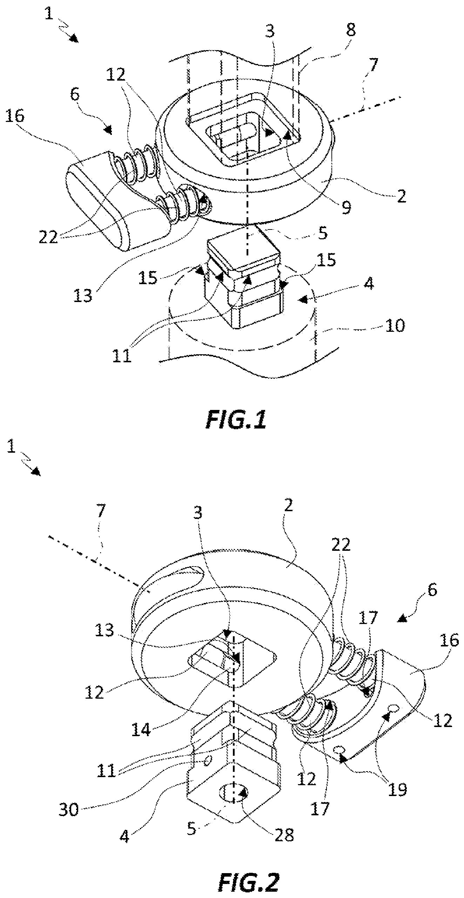

With reference to Figure 1, a preferred embodiment of a mechanical connection system 1 according to the invention can be observed, hereinafter also referred to as connection system 1 for the sake of brevity.

The connection system 1 comprises a body 2 delimiting a through opening 3, an insert 4, configured to selectively engage the through opening 3 along an engagement direction 5, a holding element 6, selectively movable connected inside the body 2 along a sliding direction 7 and configured to selectively occupy or free at least partially the through opening 3, respectively to hold or release the insert 4 housed in the through opening 3.

The body 2 is configured to be connected to a first component 8, for example a support or a mechanical arm or a similar element. The connection can be of the permanent type, for example by welding, or of the removable type, for example by means of a threaded connection.

In this regard, the body 2 has a top and a bottom wherein the top is configured to be connected to a first component 8. According to a preferred embodiment, the top has a seat 9 which is shaped so as to house at least partially one end of the first component 8 to be connected to the body 2 (see Figure 1).

The seat 9 favors the positioning of the first component 8 relative to the body 2, facilitating its subsequent connection to the body 2, for example, as mentioned, by welding.

Similarly, the insert 4 is configured to be connected to a top of a second component 10 to be connected, in a removable way, to the first component 8 through the connection system 1.

The insert 4 has a top portion and a bottom portion, wherein the top portion is configured to be inserted inside the through opening 3 while the bottom portion is configured to be connected to the second component 10.

The insert 4 is configured to be connected to the second component 10 permanently, for example by welding, or in a removable way, for example through a threaded connection or through a plug or in an equivalent way.

In the attached Figure 1, the first component 8 and the second component 10 are illustrated with broken lines, given that they do not form a specific object of the invention.

With reference to the attached Figures, the body 2 is shown in the shape of a disc, although it is understood that alternative embodiments, not illustrated, are possible, wherein the body 2 is presented as a plate element which has a development area in plan square or rectangular or polygonal without any limitation.

The through opening 3 and the insert 4 have a conformation in plan complementary to each other, to allow the insertion and coupling of the insert 4 inside the through opening 3 along the direction of engagement 5.

Between the insert 4 and the through opening 3 there is however a game to facilitate the insertion or extraction of the insert 4 itself relative to the through opening 3.

With reference to the embodiment illustrated in the attached Figures, the insert 4 is configured as a square-based prism. According to this embodiment, the insert 4 thus configured can be positioned with four different orientations with respect to the body 2, depending on how the insert 4 is rotated relative to the engagement axis 5 before being inserted into the through opening 3.

According to alternative embodiments of the insert 4, not shown in the attached Figures, the insert 4 can be configured as a prism with a rectangular or elliptical base and thus allow two different engagement positions with respect to the through opening 3 of the body 2 and prevent a relative rotation of the insert 4 when it is housed in the through opening 3.

According to a further embodiment, not shown in the attached Figures, the insert 4 is configured as a cylindrical element and allows, in this case, a possible relative rotation of the insert 4 with respect to the through opening 3, circular shaped, around an axis parallel to the engagement axis 5.

The insert 4 has a groove 11 along the top portion and, more precisely at a free end of the top portion.

The groove 11 develops perimeter around the top portion of the insert 4, regardless of the shape of the insert 4.

The insert 4 illustrated in the attached Figures is configured as a square-based prism. According to this embodiment, the groove 11 develops along each of the four sides of the insert 4.

If the insert 4 is configured circular or as a solid body with an elliptical base, according to alternative embodiments described above and not illustrated in the attached Figures, the perimeter groove 11 is configured annular or elliptical.

The holding element6 has two arms 12 which develop parallel and longitudinal to each other along the sliding direction 7.

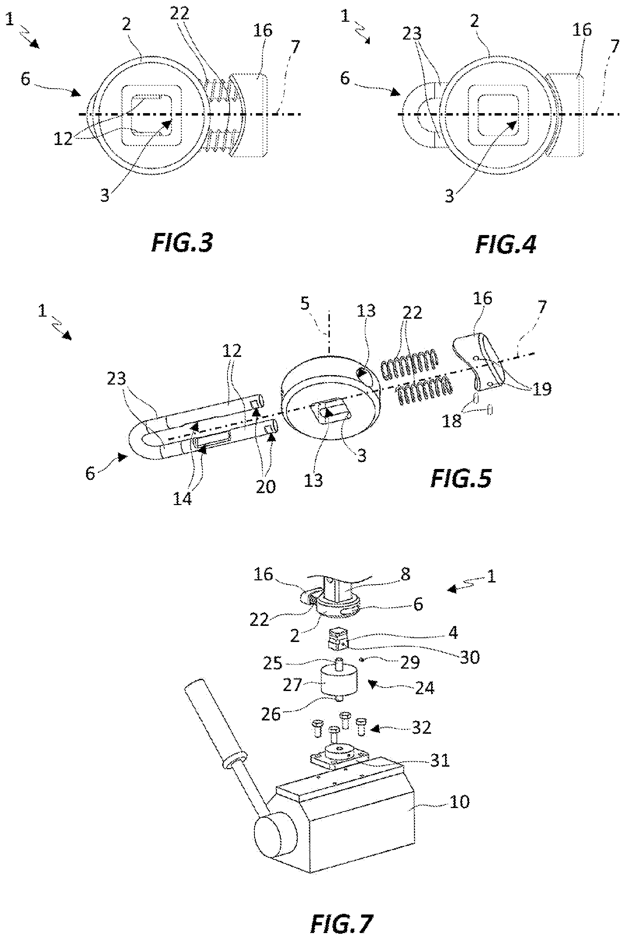

With reference to the embodiment illustrated in the attached Figures 1-6, the two arms 12 are mutually connected at their first end by means of a connecting section, for example curved (see Figures 2 and 5).

In practice, according to this embodiment, the holding element 6 has a "U" or substantially "U" configuration.

According to an alternative embodiment, the arms 12 are mutually connected at both free ends by means of connecting elements, to assume a frame configuration, as better described below.

Each of the arms 12 is slidably housed along a respective of through seats 13 delimited through the body 2, along the sliding direction 7 (see Figures 1 and 5).

The seats 13 are positioned in such a way that each has at least a section that develops through the through opening 3, thus placing the seats 13 in communication with the through opening 3.

Each arm of the arms 12, when the holding element 6 is connected to the body 2, is engaged along a respective seat between the seats 13, and extends at least partially through the bulk of the through opening 3, occupying at least partially the plan area.

In particular, as better described below, when the holding element 6 is placed in the locking position, the arms 12 have respective portions which extend at least partially inside the plan dimensions of the through opening 3, occupying it at least partially (see Figure 3).

Each of the arms 12 has a recess 14 positioned so as to face the other of the recesses 14. In other words, the recesses 14 are aligned with each other along the sliding direction 7 and are both facing inside the holding element 6 (see for example Figure 5).

The recesses 14 define a release portion for the holding element 6 along the sliding direction 7.

In this regard, it should be noted that the holding element 6 is movable relative to the body 2 and, therefore, to the through opening 3, between a locking position, wherein it at least partially engages the through opening 3 and a release position wherein it completely frees the overall dimensions of the through opening 3.

The holding element 6 when placed in the locking position retains the insert 4, when the latter is housed in the through opening 3, as better described below.

When the holding element 6 is in the locking position, the arms 12, as mentioned, occupy at least partially the overall dimensions in plan of the through opening 3 while when the holding element 6 is in the release position, the recesses 14 are overlook the through opening 3, completely freeing its overall dimensions (see Figure 4).

Evidently, the recesses 14 have a greater extension along the sliding direction 7 than the length of the portion along which the seats 13 extend passing through the through opening 3, so that it is possible to obtain a positioning of the holding element 6 with respect to the body 2 wherein the recesses 14 face the through opening 3 and the arms 12 do not occupy the plan dimensions of the through opening 3 itself.

The arms 12 of the holding element 6 are configured complementary or substantially complementary to the groove 11 of the insert 4, to retain the insert 4 itself inside the through opening 3 when the holding element 6 is positioned in the block.

In practice, to connect the insert 4 to the body 2, the insert 4 is positioned inside the through opening 3, with the groove 11 aligned with the seats 13 along the engagement direction 5, so that the portion of the arms 12 which extends inside the through opening 3 engages the groove 11, locking the insert 4 in position along the engagement direction 5.

In this regard, it should be noted that the insert 4 has at least one shoulder 15 at the bottom portion of the insert 4 (see Figure 1).

The at least one shoulder 15 is configured to abut against the bottom of the body 2, when the insert 4 is inserted into the through opening 3, and to define a stop position for the insert 4 relative to the body 2 along the engagement direction 5.

In practice, the at least one shoulder 15 facilitates the correct insertion of the insert 4 along the through opening 3 in order to obtain a correct alignment between the arms 12 of the holding element 6 and the groove 11 of the insert 4.

The connection system 1 comprises a connecting element 16 configured to mutually connect second ends of the arms 12 which, when the holding element 6 is placed in the locked position, protrude outside the body 2.

Furthermore, the connecting element 16 is configured to selectively abut against a side of the body 2 and define a stop position for the holding element 6 itself with respect to the body 2 along the sliding direction 7, wherein the holding element 6 assumes the release position.

The connecting element 16 also prevents the holding element 6 from accidentally slipping off the body 2, binding it to it.

The connecting element 16 is configured as a body which can be removably connected to the second ends of the arms 12. In this regard, the connecting element 16 has an elongated shape and defines two housing seats 17, each configured to house a respective second end of each of the arms 12 (see Figure 2).

According to a preferred embodiment, the connecting element 16 is removably connected to the arms 12 by means of dowels or pins 18 which can be engaged in respective threaded openings 19 delimited along the connecting element 16 and configured to abut against respective locking slots 20 delimited at the second ends of the arms 12 (see for example Figure 5), when the connecting element 16 is connected to the holding element6.

The locking slots 20 are positioned so as to face the threaded openings 19 delimited along the connecting element 16 and thus allow engagement with the dowels 18.

The connecting element 16 is removable connected to the holding element 6 to allow the latter to be extracted from the body 2 if necessary.

According to an alternative embodiment not shown in the attached Figures, the connecting element 16 is configured as an E-ring or a Seiger ring or similar, which can be removably connected along a locking groove 20, annularly configured, made at a second end of at least one of the arms 12. Even this alternative embodiment of the connecting element 16 firmly holds the holding element 6 connected to the body 2, while allowing its removal if maintenance is necessary of the connection system 1 or the replacement of the holding element 6.

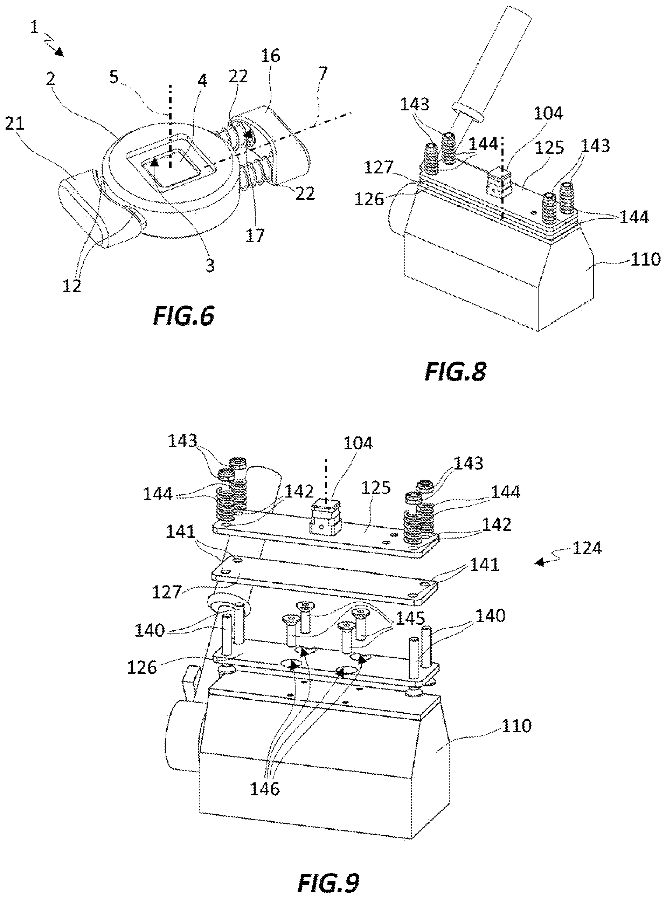

As said, according to an alternative embodiment of the holding element 6 illustrated in the attached Figure 6, the two arms 12 are mutually connected at their first ends by means of a further connection element 21 configured in a similar way to the connecting element 16, to which reference should be made in its entirety in relation to the conformation and methods of connection to the arms 12.

The further connecting element 21 is connected in a removable way to the arms 12 and defines a stop for the at least one holding element 6, to define the locking position of the holding element 6 itself along the sliding direction 7.

It is understood that alternative embodiments of the further connecting element 21 are possible, not illustrated in the attached Figures, wherein the further connecting element is shaped as an E-type ring or a Seiger ring or the like and engages a groove of annular locking 20 made along at least one of the two arms 12, at a first end thereof.

The connection system 1 comprises elastic elements 22 operatively connected to the holding element6 to keep it in the locked position or automatically return it to the locked position.

According to a preferred embodiment, the elastic elements 22 are configured as springs, each fitted along a respective one of the arms 12, in an interposed position between the body 2 and the connecting element 16.

The elastic elements 22 act in thrust on the connecting element 16, moving it away from the body 2 along the sliding direction 7 and pushing the holding element 6 towards the locking position.

Optionally, the housing seats 17 are configured to house the elastic elements 22 inside them during their compression to allow the connecting element 16 to be able to rest against a side of the body 2.

The holding element 6 optionally includes elements or sections of visual signaling 23, made along each of the arms 12.

In particular, each of the arms 12 has a respective visual signaling element 23 (see Figures 4 and 5), for example with a contrasting color with respect to the remaining portions of the arms 12 or bearing a contrasting colored insert or a visual signal, wherein each visual signaling element 23 is made in correspondence with a respective one of the first ends of the arms 12 and allows to visually check whether the holding element 6 is correctly in the locked position or not.

Each visual signaling element 23, in fact, is at least partially visible outside the body 2 when the holding element 6 is in the release position or has not fully assumed the locking position.

In this regard, it should be noted that in the event that the holding element 6 partially assumes a locking position, for example because it is jammed during its movement along the sliding direction 7, the at least one visual signaling element 23 it is partially visible outside the body 2, indicating that the holding element 6 is not positioned correctly in the locking position.

Below is a brief description of the connection between the insert 4 and the body 2 of the connection system 1 and, therefore, between a second component 10 connected to the insert 4 and a first component 8 connected to the body 2.

The holding element 6, as a rule, is in a locked position following the thrust action exerted by the elastic elements 16.

It acts on the holding element 6, pushing it along the sliding direction 7, acting on the connecting element 16, in order to counteract the force exerted by the elastic elements 22 until their compression is determined.

During the compression of the elastic elements 22, the holding element 6 is moved along the sliding direction 7 until the recesses 14 face the through opening 3, completely freeing up its overall dimensions.

With the through opening 3 free, insert 4 is inserted inside it, pushing it along the direction of engagement 5, until the at least one shoulder 15 abuts against the bottom of the body 2, aligning the groove 11 with the seats 13 of the body 2 and, therefore, the arms 12 to the groove 11 along the engagement direction 5.

Then, the connecting element 16 is released and, consequently, the elastic elements 22 push the holding element 6 along the sliding direction 7, bringing it to the locking position (see Figure 3). With the holding element 6 in the locked position, the recesses 14 are positioned along the sliding direction 7 away from the through opening 3 and the portion of the arms 12 which extends into the through opening 3, through the seats 13, engages respective portions of the groove 11. In this way, the insert 4 is connected to the body 2 through the engagement between the holding element 6 and the groove 11 of the insert 4.

The movement of the holding element 6 along the sliding direction 7 by the elastic elements 22 continues until the connecting portion of the holding element 6 or any further connecting element 21, if present, strikes against the side of the body 2, causing the locking position to be reached and preventing further advancement of the holding element 6.

In the locking position, the arms 12 engage with their section the groove 11, binding the insert 4 inside the body 2 and, consequently, connecting together the first component 8 and the second component 10.

To disconnect the insert 4 from the body 2, it acts similarly to what is described above, pushing the holding element 6 in order to counteract the action of the elastic elements 22, until the holding element 6 is positioned in the release position.

With reference to the above, it is evident that the connection system 1 according to the invention is able to achieve the intended purposes.

The connection system 1, in fact, is extremely practical and easy to operate to allow an insert 4 to be mutually connected or released relative to the body 2 and, therefore, a first component 8 and a second component 10 respectively connected to the body 2 and to the insert 4.

The presence of the connecting element 16 facilitates the selective movement of the holding element 6 without requiring the aid of any tool by a user who can control the holding element 6 from a locking position to a release position acting with bare hands on the connecting element 16 itself. In practice, the connecting element 16 acts as a button or command against which to act to move the holding element 6 between the locking position and the release position.

The connection between the body 2 and the insert 4 takes place in a balanced and firm way since the arms 12 act from opposite sides, in a mirror image with respect to the groove 11, in favor of a high stability and safety in the connection guaranteed by the connection system 1.

It is then noted that the arms 12 are slidably housed along respective seats 13 delimited in the body 2 and, therefore, the arms 12 are kept firmly in position, at the same mutual distance, preventing them from moving away and reducing the grip on the insert 4, holding it stably.

The connection system 1 is therefore able to withstand high stresses and to guarantee the firm connection between the body 2 and the insert 4 and, therefore, between a first component 8 and a second component 10 operatively connected to the body 2 and to the insert 4.

As mentioned, according to a further aspect of the present invention, the connection system 1 is configured to distribute the stresses acting on the insert 4 to the advantage of a safe and firm connection between it and the body 2.

In this regard, it should be noted that the connection system 1 comprises a mechanical damper, indicated as a whole with 24, operatively connected to the insert 4, on the opposite side with respect to the top portion that engages the through opening 3 and configured to dampen any impacts or stresses transmitted by the second component 10.

The damper 24 is partially compliant to allow to compensate for any misalignments and to give mobility to the connection between the insert 4 and the second component 10 connected to it.

With reference to what is illustrated in the attached Figures 8 and 9, the second component 10 is configured as a magnetic gripping head and the mobility, albeit reduced, between the second component 10 and the insert 4 allows to keep the second component 10 aligned with respect to an object to be hooked, compensating and thus reducing any impulsive detachment forces acting on the second component 10, ensuring a stable and safe grip of the same and, therefore, its correct operation.

A first embodiment of the damper 24 is shown exploded in the attached Figure 7.

By way of non-limiting example, in the attached Figure 7, as well as in Figures 8-11 relating to further embodiments of the damper 24, the second component 10 is illustrated as a magnetic gripping head, although it is understood that alternative tools or components are possible connected to damper 24 without any limitation.

In general, the damper 24 comprises a first connection interface 25, a second connection interface 26 and at least one damper element 27 interposed between the first connection interface 25 and the second connection interface 26.

The damper element 27 acts as a filter for the transmissible stresses between the first connection interface 25 and the second connection interface 20, as well as allowing reciprocal movement between them.

In fact, the damper element 27 acts as a deformable joint, capable of allowing the second connection interface 26, and therefore the second component 10 connected to it, to move relative to the first connection interface 25 to thus allow the second connection interface 26 to assume an optimal orientation and allow the second component connected to it to perform optimally.

In fact, in the case wherein the second component 10 is configured as a magnetic gripping head for lifting a manhole cover, maintain a position as parallel and adherent as possible with respect to the load to be lifted, i.e. the manhole cover compensates the movements generated on the first connection interface 25, transmitted to this through the first component 8 operatively connected to the second component 10, reducing and supporting the effects due to impulsive detachment forces. In fact, the magnetic gripping head ensures high performance as long as it is operated perpendicularly with respect to a flat gripping or hooking surface, while when it is pulled along inclined directions with respect to this gripping surface it tends to detach, due to the oblique forces acting on the head magnetic socket itself.

The damper 24 allows to reduce the effect generated by these oblique forces.

With reference to the embodiment illustrated in the attached Figure 7, the damper element 21 mutually connects the first connection interface 25 and the second connection interface 26.

The first connection interface 25 is preferably configured as a pin or a stem or a similar element attached to the damper element 27 and which protrudes from a top thereof.

The portion of the first interface 25 that protrudes from the top of the damper element 26 can be engaged in a hole 28 delimited at the bottom portion of the insert 4 (see Figure 2).

The first interface 25 can be removably connected to the insert 4, for example, by means of a dowel 29 or a screw or similar element in engagement along a threaded seat 30 made in the insert 4 and in communication with the hole 28, so such that the dowel or the screw 29 can be screwed into the threaded seat 30 until it is placed in abutment or in engagement with the portion of the first interface 25 which is engaged in the insert 4, which can have a respective locking groove similarly to what is described in relation to the connection between the arms 12 of the holding element 6 and the connecting element 16, to which reference should be made.

The second connection interface 26 is connected to the second component 10 according to the same methods described in relation to the connection between the first connection interface 25 and the insert 4.

The second connection interface 26 is configured as a pin bound to the damper element 27 and which has a bottom end that protrudes outside the damper 24, from the bottom of the latter.

It should be noted that in the attached Figure 7 the second connection interface 26 is operationally connected to a support plate 31 which is in turn removably connected to the second component 10, for example by means of a bolted connection 32, in a manner within the reach of the person skilled in the sector who, therefore, will not be described in detail.

The support plate 31 and the bolted connection 32 allow a removable connection between the second component 10 and the second connection interface 26 to allow, if required, the replacement of the second component 10 with a further second component of the same or different type depending on specific use requirements, without requiring the replacement of the entire damper 24.

It is understood that alternative connection methods are possible, of the removable type between the insert 4 and the first connection interface 25 as well as between the second connection interface 26 and the second component 10, within the reach of the person skilled in the art which will not be then described in detail.

It is understood that according to an alternative embodiment, the damper 24 is permanently bound to the insert 4 and/or to the second component 10.

A further embodiment of the damper usable in the connection system 1 according to the present invention is illustrated in the attached Figures 8 and 9 and is indicated as a whole with 124.

In the following description, the same reference numbers increased by one hundred units will be used to indicate the same components described in relation to the previous embodiment.

The following description will be limited to the damper 124, provided that the remaining components of the connection system 1 are identical to those described in connection with the previous embodiment of the damper 24.

The damper 124 differs from the damper 24 in that the damper element 127 is interposed between the first connection interface 125 and the second connection interface 126 without being bound thereto, i.e. without being permanently connected thereto.

In practice, the damper 124 comprises a damper element 127 interposed between the first connection interface 125 and the second connection interface 126, resting against them and capable of moving with respect to both.

According to this embodiment, the first connection interface 125 and the second connection interface 126 are mutually connected via a removable, preferably threaded, mechanical connection.

This mechanical connection includes elastic elements configured to ensure a pushing action of the first connection interface 125 against the second connection interface 126 and, consequently, against the damper element 127.

The first connection interface 125 and the second connection interface 126 are both configured as sheet-like elements.

Insert 104 protrudes from a top of the first connection interface 125.

The damper 124 includes screws 140 for the mutual connection between the first connection interface 125, the second connection interface 126 and the damper element 127.

The head of the screws 140 is placed against the second connection interface 126 and the respective threaded stems engage through openings 141 delimited along the damper element 127 and respective through seats 142 delimited through the first connection interface 125.

Preferably, the second connection interface 125 has flares, not shown in the attached Figures 8 and 9, each configured to house the countersunk head of a respective screw between the screws 140, so as to house it inside and prevent it from extends externally with respect to the second connection interface 126.

Nuts 143 engage the threaded shanks of screws 140.

Between each nut of the nuts 143 and the first connection interface 125 there is interposed a respective elastic element 144, configured to exert a pushing action against the first connection interface 125 itself to keep it pressed towards the damper element 127 and the second interface connection 126.

Each elastic element 144 exerts a thrust action on one side against a respective nut 143 and on the other side against the first connection interface 125.

According to a preferred embodiment, the second connection interface 126 is connected to the second component 110 by means of connection screws 145 in order to be selectively removed from the second component 110 if required.

In this regard, the second connection interface 126 has second countersunk seats 146 each shaped so as to house a respective one of the countersunk heads of the respective connection screws 145 and to delimit a passage opening for the passage of a respective stem of the connecting screws 145 themselves.

When the connecting screws 145 are housed in the respective countersunk seats 146, the stems protrude from a bottom portion of the second connection interface 126 so as to engage respective threaded seats made in the second component 110, to ensure its connection to the second connection interface connection 126.

The damper 124 allows a greater relative movement between the first connection interface 125 and the second connection interface 126 with respect to the damper 24 previously described, in the face of a more complex structure.

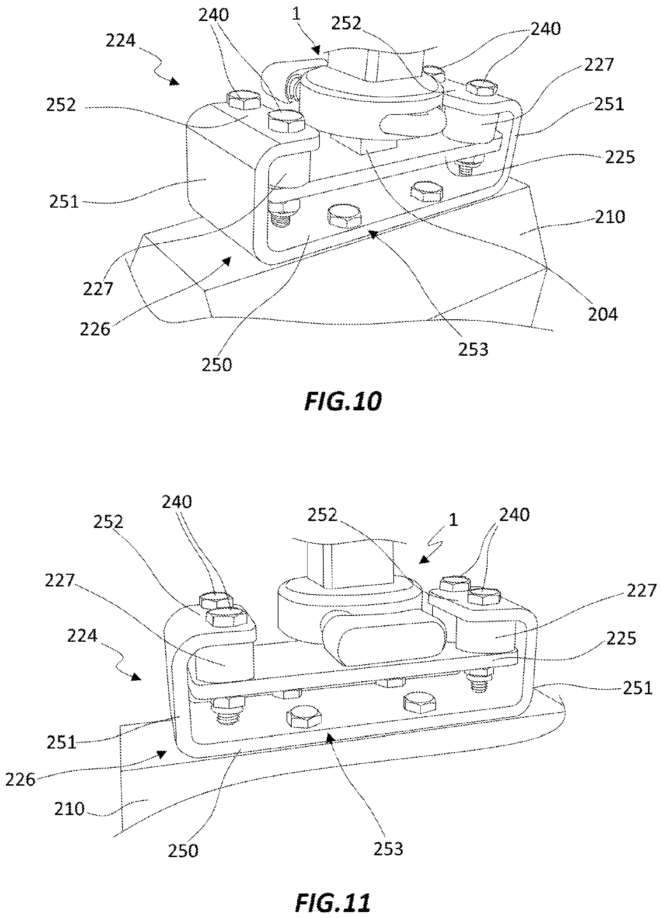

A further embodiment of the damper is illustrated in the attached Figures 10 and 11 and indicated as a whole with 224.

In the following description, the same reference numbers increased by one hundred units will be used to indicate the same components described in relation to the previous embodiment.

Damper 224 differs from both previous embodiments of damper 24, 124 in relation to the connection mode between the first connection interface 225 and the second connection interface 226.

The damper 224 comprises a first connection interface 225 and a second connection interface 226 between which damper elements 227 are interposed.

The first connection interface 225 and the second connection interface 226 are connected to each other via a screw connection 240.

More in detail, it should be noted that the first connection interface 225 has a plate-like configuration while the second connection interface 226 has a "C" or substantially "C" configuration inside which the first connection interface is housed movable 225.

The first connection interface 225 has a top from which the insert 204 protrudes.

The second connection interface 226 has a flat bottom portion 250 on opposite sides of which two side walls 251 protrude. Each side wall 251 has a curved top end 252 (see Figures 9 and 10).

Each curved top 252 defines a flat surface parallel or substantially parallel to the bottom portion 250.

In practice, the second connection interface 226 defines a housing for the first connection interface 225, which can move relative to the second connection interface 226.

Each among the screws 240 engages a respective curved top 252 of the second interface 226 and the opposite ends of the first connection interface 225.

The damper 224 comprises damper elements 227 each fitted along a respective screw of the screws 240, in an interposed position between the first connection interface 225 and the second connection interface 226.

In particular, each of the damper elements 227 is placed in correspondence of its top against the second connection interface 226, and more precisely against a respective curved top 252, and in correspondence of its bottom against the first connection interface 225.

According to a preferred embodiment, the second connection interface 226 is in turn connected to the second component 210 by means of a bottom threaded connection 253 according to similar methods described in relation to the connection between the second connection interface 126 and the second component 110, to which reference is made in full.

It is understood that according to an alternative embodiment, not shown in the attached Figures, the second connection interface 226 is permanently bound to the second component 210, for example by welding.

The damper 224 is capable of fulfilling the same purposes described in relation to the previous embodiments, with particular reference to the damper 124, to which reference should be made.

It is understood that the damper 24, 124, 224 can be used independently of the other previously described features of the connection system 1.

From the foregoing it is clear that the connection system 1 according to the invention is able to achieve the intended purposes.

In particular, the connection system 1 allows in a practical and easy way to connect or disconnect two components together as well as to ensure a firm connection between them. In fact, the connection system 1 ensures a stable and firm connection between a first component 8 and a second component 10, 110, 210 and capable of withstanding high stresses, such as for example a high weight force acting on the second component 10, 110, 210 and transmitted to the first component 8 through the connection system 1.

The possible presence of a damper 24, 124, 224 also makes it possible to reduce and dampen the stresses transmitted between the first component 8 and the second component 10, 110, 210, reducing the effects of any impacts to which at least one of the components may be subjected. first component 8 or second component 10, 110, 210 during its use, as well as to ensure optimal positioning of the second component 10, 110, 210 during its use.

In the foregoing, the preferred embodiments have been described and variants of the present invention have been suggested, but it is to be understood that those skilled in the art will be able to make modifications and changes without thereby departing from the relative scope of protection, as defined by the claims attached.

## Claims

1. Mechanical connection system (1) comprising:
- a body (2) delimiting a through opening (3),
- an insert (4; 104; 204) configured to selectively engage said through opening (3) along an engagement direction (5);
- a holding element (6), slidingly connected inside said body (2) along a sliding direction (7) perpendicular to said engagement direction (5), wherein said holding element (6) can be moved selectively between a lock configuration, wherein it occupies at least partially a plan dimension of said through opening (3) to lock said insert (4; 104; 204) inside said through opening (3) and a release position in which said holding element (6) completely frees the plan dimension of said through opening (3) to release said insert (4)
wherein said holding element (6) has two arms (12) which extend parallel and longitudinal to each other along said sliding direction (7) and are mutually connected at their first ends, wherein each arm of said arms (12) is slidably housed along a respective seat between seats (13) made passing through said body (2), wherein said seats (13) extend along said sliding direction (7),
and wherein the mechanical connection system (1) comprises a connecting element (16) connected to second ends of said arms (12), wherein both said second ends extend outside said body (2) in the opposite position to said first ends of said arms (12), said connecting element (16) defining a stop position of said holding element (6) with respect to said body (2) along said sliding direction (7).

2. Mechanical connection system (1) according to claim 1, wherein said seats (13) each have at least one section in communication with said through opening (3) so that each arm of said arms (12) in engagement along a respective seat between said seats (13) extends at least partially into the plan dimensions of said through opening (3) when said holding element (6) is placed in said lock configuration.

3. Mechanical connection system (1) according to claim 2, wherein said insert (4; 104; 204) has a groove (11) which extends perimetrically around a top portion of said insert (4; 104; 204), wherein said groove (11) is configured to be engaged by at least a portion of said arms (12) when said insert (4; 104; 204) is housed in said through opening (3) and said holding element (6) is in the lock configuration.

4. Mechanical connection system (1) according to any one of claims 2-3, wherein each of said arms (12) has a recess (14), wherein said recess (14) of one of said arms (12) faces on said recess (14) of the other between said arms (12), said recesses (14) being aligned with each other along said sliding direction (7), wherein when said holding element (6) is in the release position said recesses (14) are positioned facing onto said through opening (3), completely freeing the overall plan dimensions of said through opening (3) from the encumbrance of said arms (12).

5. Mechanical connection system (1) according to claim 1, comprising elastic elements (22) each fitted along a respective one of said arms (12) in an interposed position between said body (2) and said connecting element (16), wherein said elastic elements (22) are configured to keep said holding element (6) in the lock configuration or return it to the lock configuration.

6. Mechanical connection system (1) according to any one of claims 1 to 5, wherein each of said arms (12) has at least one visual signaling element (23) at a respective one of said first ends of said arms (12), wherein said at least one visual signaling element (23) extends at least partially outside said body (2) when said holding element (6) assumes a different position with respect to said lock configuration.

7. Mechanical connection system (1) according to any one of the preceding claims, comprising a damper (24; 124; 224) operatively connected to said insert (4; 104; 204) on the opposite side with respect to a top portion of said insert (4; 104; 204).

8. Mechanical connection system (1) according to claim 7, wherein said damper (24; 124; 224) comprises a first connection interface (25; 125; 225), a second connection interface (26; 126; 226 ) and at least one damper element (27; 127; 227) interposed and operatively connected between said first connection interface (25; 125; 225) and said second connection interface (26; 126; 226), wherein said first connection interface (20; 120, 220) is connected to a bottom portion of said insert (4; 104; 204).

9. Mechanical connection system (1) according to claim 8, wherein said first connection interface (25) and said second connection interface (26) are mutually and yieldingly connected via said damper element (24) or wherein said first connection interface (125) and said second connection interface (126) are mutually and yieldably connected by means of screws (140) and respective elastic elements (144) fitted along each of said screws (140) or wherein said first connection interface (225) and said second connection interface (226) are mutually and yieldably connected by means of screws (240), wherein said damper elements (227) are each interposed along a respective screw between said screws (240) in position interposed between said first connection interface (225) and said second connection interface (226).

10. Mechanical assembly comprising a first component (8) and a second component (10; 110; 210) and a mechanical connection system (1) according to any one of the preceding claims, wherein said body (2) of said connection system (1) is connected to one end of said first component (8) and said insert (4; 104; 204) is operatively connected to said second component (10; 110; 210), said connection system (1) being configured to mutually connect or release said first component (8) and said second component (10; 110; 210).

## Patentansprüche

1. Mechanisches Verbindungssystem (1), umfassend:
- einen Körper (2), der eine Durchgangsöffnung (3) begrenzt,
- einen Einsatz (4; 104; 204), der so konfiguriert ist, dass er selektiv entlang einer Eingriffsrichtung (5) in die Durchgangsöffnung (3) eingreift;
- ein Halteelement (6), das innerhalb des Körpers (2) entlang einer Gleitrichtung (7) senkrecht zur Eingriffsrichtung (5) gleitend verbunden ist, wobei das Halteelement (6) selektiv zwischen einer Verriegelungskonfiguration, in der es zumindest teilweise eine ebene Abmessung der Durchgangsöffnung (3) einnimmt, um den Einsatz (4; 104; 204) innerhalb der Durchgangsöffnung (3) zu verriegeln, und einer Freigabeposition, in der das Halteelement (6) die Grundfläche der Durchgangsöffnung (3) vollständig freigibt, um den Einsatz (4) freizugeben, wobei das Halteelement (6) zwei Arme (12) aufweist, die sich parallel und in Längsrichtung zueinander entlang der Gleitrichtung (7) verlaufen und an ihren ersten Enden miteinander verbunden sind, wobei jeder Arm der Arme (12) entlang eines jeweiligen Sitzes zwischen Sitzen (13), die durch den Körper (2) hindurchgeführt sind, verschiebbar gelagert ist, wobei sich die Sitze (13) entlang der Gleitrichtung (7) erstrecken, und wobei das mechanische Verbindungssystem (1) ein Verbindungselement (16) umfasst, das mit zweiten Enden der Arme (12) verbunden ist, wobei sich beide zweiten Enden außerhalb des Körpers (2) in der entgegengesetzten Position zu den ersten Enden der Arme (12) erstrecken, wobei das Verbindungselement (16) eine Anschlagposition des Halteelements (6) in Bezug auf den Körper (2) entlang der Gleitrichtung (7) definiert.

2. Mechanisches Verbindungssystem (1) nach Anspruch 1, wobei die Sitze (13) jeweils mindestens einen Abschnitt aufweisen, der mit der Durchgangsöffnung (3) in Verbindung steht, so dass sich jeder Arm der Arme (12), der entlang eines jeweiligen Sitzes zwischen den Sitzen (13) in Eingriff steht, mindestens teilweise in die Grundfläche der Durchgangsöffnung (3) erstreckt, wenn das Halteelement (6) in die Verriegelungskonfiguration gebracht wird.

3. Mechanisches Verbindungssystem (1) nach Anspruch 2, wobei der Einsatz (4; 104; 204) eine Nut (11) aufweist, die sich umfänglich um einen oberen Abschnitt des Einsatzes (4; 104; 204) herum verläuft, wobei die Nut (11) so konfiguriert ist, dass sie von mindestens einem Teil der Arme (12) in Eingriff genommen wird, wenn der Einsatz (4; 104; 204) in der Durchgangsöffnung (3) untergebracht ist und sich das Halteelement (6) in der Verriegelungskonfiguration befindet.

4. Mechanisches Verbindungssystem (1) nach einem der Ansprüche 2-3, wobei jeder der Arme (12) eine Aussparung (14) aufweist, wobei die Aussparung (14) eines der Arme (12) der Aussparung (14) des anderen Arms (12) zwischen den Armen (12) zugewandt ist, wobei die Aussparungen (14) entlang der Gleitrichtung (7) ausgerichtet sind, wobei, wenn sich das Halteelement (6) in der Freigabeposition befindet, die Aussparungen (14) so positioniert sind, dass sie zur Durchgangsöffnung (3) zeigen, wodurch die Gesamtabmessungen der Durchgangsöffnung (3) vollständig von den Armen (12) befreit werden.

5. Mechanisches Verbindungssystem (1) nach Anspruch 1, umfassend elastische Elemente (22), die jeweils entlang eines der Arme (12) in einer Zwischenposition zwischen dem Körper (2) und dem Verbindungselement (16) angebracht sind, wobei die elastischen Elemente (22) so konfiguriert sind, dass sie das Halteelement (6) in der Verriegelungskonfiguration halten oder es in die Verriegelungskonfiguration zurückbringen.

6. Mechanisches Verbindungssystem (1) nach einem der Ansprüche 1 bis 5, wobei jeder der Arme (12) mindestens ein visuelles Signalelement (23) an einem jeweiligen der ersten Enden der Arme (12) aufweist, wobei sich das mindestens eine visuelle Signalelement (23) zumindest teilweise außerhalb des Körpers (2) erstreckt, wenn das Halteelement (6) eine andere Position in Bezug auf die Verriegelungskonfiguration einnimmt.

7. Mechanisches Verbindungssystem (1) nach einem der vorstehenden Ansprüche, umfassend einen Dämpfer (24; 124; 224), das funktionsfähig mit dem Einsatz (4; 104; 204) auf der gegenüberliegenden Seite in Bezug auf einen oberen Abschnitt des Einsatzes (4; 104; 204) verbunden ist.

8. Mechanisches Verbindungssystem (1) nach Anspruch 7, wobei der Dämpfer (24; 124; 224) eine erste Verbindungsschnittstelle (25; 125; 225), eine zweite Verbindungsschnittstelle (26; 126; 226 ) und mindestens ein Dämpfungselement (27; 127; 227) umfasst, das zwischen der ersten Verbindungsschnittstelle (25; 125; 225) und der zweiten Verbindungsschnittstelle (26; 126; 226) angeordnet und funktionsfähig verbunden ist, wobei die erste Verbindungsschnittstelle (20; 120, 220) mit einem unteren Abschnitt des Einsatzes (4; 104; 204) verbunden ist.

9. Mechanisches Verbindungssystem (1) nach Anspruch 8, wobei die erste Verbindungsschnittstelle (25) und die zweite Verbindungsschnittstelle (26) über das Dämpfungselement (24) miteinander elastisch verbunden sind oder wobei die erste Verbindungsschnittstelle (125) und die zweite Verbindungsschnittstelle (126) mittels Schrauben (140) und entsprechenden elastischen Elementen (144), die entlang jeder der Schrauben (140) angebracht sind, miteinander elastisch verbunden sind, oder wobei die erste Verbindungsschnittstelle (225) und die zweite Verbindungsschnittstelle (226) mittels Schrauben (240) miteinander elastisch verbunden sind, wobei die Dämpfungselemente (227) jeweils entlang einer jeweiligen Schraube zwischen den Schrauben (240) in einer Position zwischen der ersten Verbindungsschnittstelle (225) und der zweiten Verbindungsschnittstelle (226) angeordnet sind.

10. Mechanische Baugruppe umfassend eine erste Komponente (8) und eine zweite Komponente (10; 110; 210) und ein mechanisches Verbindungssystem (1) gemäß einem der vorstehenden Ansprüche, wobei der Körper (2) des Verbindungssystems (1) mit einem Ende der ersten Komponente (8) verbunden ist und das Innenteil (4; 104; 204) funktional mit der zweiten Komponente (10; 110; 210) verbunden ist, wobei das Verbindungssystem (1) so konfiguriert ist, dass es die erste Komponente (8) und die zweite Komponente (10; 110; 210) miteinander verbindet oder voneinander löst.

## Revendications

1. Système de liaison mécanique (1) comprenant :
- un corps (2) délimitant une ouverture traversante (3),
- un insert (4 ; 104 ; 204) configuré pour s'engager de manière sélective avec ladite ouverture traversante (3) le long d'une direction d'engagement (5) ;
- un élément de maintien (6), relié en coulissement à l'intérieur dudit corps (2) le long d'une direction de coulissement (7) perpendiculaire à ladite direction d'engagement (5), dans lequel ledit élément de maintien (6) est déplaçable de manière sélective entre une configuration de verrouillage, dans laquelle il occupe au moins partiellement une dimension en plan de ladite ouverture traversante (3) pour verrouiller ledit insert (4 ; 104 ; 204) à l'intérieur de ladite ouverture traversante (3) et une position de libération dans laquelle ledit élément de maintien (6) libère complètement la dimension en plan de ladite ouverture traversante (3) pour libérer ledit insert (4),
dans lequel ledit élément de maintien (6) a deux bras (12) qui s'étendent parallèlement et longitudinalement l'un par rapport à l'autre le long de ladite direction de coulissement (7) et sont reliés mutuellement au niveau de leurs premières extrémités, dans lequel chaque bras desdits bras (12) est reçu en coulissement le long d'un siège respectif entre des sièges (13) traversant ledit corps (2), dans lequel lesdits sièges (13) s'étendent le long de ladite direction de coulissement (7), et dans lequel le système de liaison mécanique (1) comprend un élément de liaison (16) relié à des secondes extrémités desdits bras (12), dans lequel lesdites secondes extrémités s'étendent toutes deux à l'extérieur dudit corps (2) dans la position opposée auxdites premières extrémités desdits bras (12), ledit élément de liaison (16) définissant une position d'arrêt dudit élément de maintien (6) par rapport audit corps (2) le long de ladite direction de coulissement (7).

2. Système de liaison mécanique (1) selon la revendication 1, dans lequel lesdits sièges (13) ont chacun au moins une section en communication avec ladite ouverture traversante (3) de sorte que chaque bras desdits bras (12) en engagement le long d'un siège respectif entre lesdits sièges (13) s'étende au moins partiellement dans les dimensions en plan de ladite ouverture traversante (3) lorsque ledit élément de maintien (6) est placé dans ladite configuration de verrouillage.

3. Système de liaison mécanique (1) selon la revendication 2, dans lequel ledit insert (4 ; 104 ; 204) a une rainure (11) qui s'étend de manière périmétrique autour d'une partie supérieure dudit insert (4 ; 104 ; 204), dans lequel ladite rainure (11) est configurée pour être engagée par au moins une partie desdits bras (12) lorsque ledit insert (4 ; 104 ; 204) est reçu dans ladite ouverture traversante (3) et ledit élément de maintien (6) est dans la configuration de verrouillage.

4. Système de liaison mécanique (1) selon l'une quelconque des revendications 2 et 3, dans lequel chacun desdits bras (12) a un évidement (14), dans lequel ledit évidement (14) de l'un desdits bras (12) fait face audit évidement (14) de l'autre entre lesdits bras (12), lesdits évidements (14) étant alignés entre eux le long de ladite direction de coulissement (7), dans lequel, lorsque ledit élément de maintien (6) est dans la position de libération, lesdits évidements (14) sont positionnés face à ladite ouverture traversante (3), libérant complètement toutes les dimensions en plan de ladite ouverture traversante (3) de l'encombrement desdits bras (12).

5. Système de liaison mécanique (1) selon la revendication 1, comprenant des éléments élastiques (22) montés chacun le long d'un bras respectif desdits bras (12) dans une position interposée entre ledit corps (2) et ledit élément de liaison (16), dans lequel lesdits éléments élastiques (22) sont configurés pour maintenir ledit élément de maintien (6) dans la configuration de verrouillage ou le ramener à la configuration de verrouillage.

6. Système de liaison mécanique (1) selon l'une quelconque des revendications 1 à 5, dans lequel chacun desdits bras (12) a au moins un élément de signalisation visuelle (23) au niveau d'une extrémité respective desdites premières extrémités desdits bras (12), dans lequel ledit au moins un élément de signalisation visuelle (23) s'étend au moins partiellement à l'extérieur dudit corps (2) lorsque ledit élément de maintien (6) adopte une position différente par rapport à ladite configuration de verrouillage.

7. Système de liaison mécanique (1) selon l'une quelconque des revendications précédentes, comprenant un amortisseur (24 ; 124 ; 224) relié de manière fonctionnelle audit insert (4 ; 104 ; 204) sur le côté opposé par rapport à une partie supérieure dudit insert (4 ; 104 ; 204).

8. Système de liaison mécanique (1) selon la revendication 7, dans lequel ledit amortisseur (24 ; 124 ; 224) comprend une première interface de liaison (25 ; 125 ; 225), une seconde interface de liaison (26 ; 126 ; 226) et au moins un élément amortisseur (27 ; 127 ; 227) interposé et relié de manière fonctionnelle entre ladite première interface de liaison (25 ; 125 ; 225) et ladite seconde interface de liaison (26 ; 126 ; 226), dans lequel ladite première interface de liaison (20 ; 120, 220) est reliée à une partie inférieure dudit insert (4 ; 104 ; 204).

9. Système de liaison mécanique (1) selon la revendication 8, dans lequel ladite première interface de liaison (25) et ladite seconde interface de liaison (26) sont reliées mutuellement et de manière élastique via ledit élément amortisseur (24) ou dans lequel ladite première interface de liaison (125) et ladite seconde interface de liaison (126) sont reliées mutuellement et de manière élastique au moyen de vis (140) et d'éléments élastiques respectifs (144) montés le long de chacune desdites vis (140) ou dans lequel ladite première interface de liaison (225) et ladite seconde interface de liaison (226) sont reliées mutuellement et de manière élastique au moyen de vis (240), dans lequel lesdits éléments amortisseurs (227) sont chacun interposés le long d'une vis respective entre lesdites vis (240) dans une position interposée entre ladite première interface de liaison (225) et ladite seconde interface de liaison (226).

10. Ensemble mécanique comprenant un premier composant (8) et un second composant (10 ; 110 ; 210) et un système de liaison mécanique (1) selon l'une quelconque des revendications précédentes, dans lequel ledit corps (2) dudit système de liaison (1) est relié à une extrémité dudit premier composant (8) et ledit insert (4 ; 104 ; 204) est relié de manière fonctionnelle audit second composant (10 ; 110 ; 210), ledit système de liaison (1) étant configuré pour relier ou libérer mutuellement ledit premier composant (8) et ledit second composant (10 ; 110 ; 210).
